# EUROPEAN PATENT APPLICATION

(11) **EP 4 421 128 A1**
(43) Date of publication of application: **28.08.2024**
(21) Application number: 22883398.4
(22) Date of filing: 11.10.2022
(51) Int. Cl.: C08L 83/06, C08K 3/013, C08K 5/5425, C08K 5/544, C09D 183/06, C09J 183/06, C09K 3/10

(54) **ROOM TEMPERATURE-CURABLE ORGANOPOLYSILOXANE COMPOSITION, ADHESIVE, SEALING AGENT, AND COATING AGENT**

(30) Priority: 19.10.2021 JP 2021170586
(71) Applicant: SHIN-ETSU CHEMICAL CO., LTD., Tokyo 1000005 (JP)
(72) Inventor: FUJIWARA Akitsugu, Annaka-shi, Gunma 379-0224 (JP); SAKAMOTO Takafumi, Annaka-shi, Gunma 379-0224 (JP)
(74) Representative: Angerhausen, Christoph
(86) International application number: PCT/JP2022/037785
(87) International publication number: WO 2023/068094

(57) **Abstract**

Provided are a room temperature-vulcanizing (RTV) silicone rubber composition, etc. that exhibit excellent rapid curing properties and adhesion, that exhibit good storage stability, and that can provide a cured product having durability (under heat-resistant and moisture-resistant conditions) without adding an environmentally harmful metal-based condensation catalyst that has been commonly used. A room temperature-curable organopolysiloxane composition according to the present invention contains (A) an organopolysiloxane, (B) a hydrolyzable organosilane compound having two hydrolyzable silyl-vinylene groups on one silicon atom, (C) an inorganic filler, and (D) an amino functional group-containing hydrolyzable organosilane compound having 3 or more nitrogen atoms in one molecule and/or a partially hydrolyzed condensate thereof.

## Description

### Technical Field

The present invention relates to a room temperature-curable organopolysiloxane composition (room temperature-vulcanizing silicone rubber composition) that is cured by moisture (water) in the air at room temperature (23°C ± 15°C) to provide a silicone rubber cured product (silicone elastomer elastic body). In particular, the invention relates to a room temperature-curable organopolysiloxane composition containing, as a base polymer, an organopolysiloxane capped at both ends of the molecular chain with hydrolyzable silyl groups; as a crosslinking agent (curing agent), a hydrolyzable organosilane compound having two hydrolyzable silyl-vinylene groups on one silicon atom; and, as a condensation catalyst, a specific amino functional group-containing hydrolyzable organosilane compound, the room temperature-curable organopolysiloxane composition having good curability (rapid curing properties) and excellent adhesion and being capable of providing a silicone rubber cured product that exhibits excellent durability even under wet-heat conditions without adding an environmentally harmful metal-based condensation catalyst that has been commonly used in existing room temperature-curable organopolysiloxane compositions, and an adhesive, a sealing agent, and a coating agent that contain the composition.

### Background Art

Room temperature-vulcanizing (RTV) silicone rubber compositions (room temperature-curable organopolysiloxane compositions) that are crosslinked/cured by moisture are suitable for various applications such as sealants for construction materials, and adhesives and coating agents (sealing agents) in the electric/electronic field because of their ease of handleability and excellent weather resistance and electrical properties. Typical room temperature-curable organopolysiloxane compositions contain a diorganopolysiloxane (base polymer) having, at molecular chain ends, silanol groups (hydroxy groups bonded to silicon atoms) or alkoxysilyl groups, a curing agent, an aminoalkyl group-containing alkoxysilane, and a curing catalyst, and in order to impart, for example, flame retardancy, thermal conductivity, and tensile strength, various fillers are added to the compositions as needed.

Deoximation-type room temperature-curable organopolysiloxane compositions known as general sealants for constructions and structures are widely used because they exhibit curability, durability, and adhesion to various adherends; however, it is known that the resulting cured products undergo significant changes in rubber physical properties when placed in high-temperature high-humidity environments, and have poor durability. Acetic acid elimination-type room temperature-curable organopolysiloxane compositions are also widely used as sealants for constructions and structures, and it is known that they exhibit good curability and adhesion, and discoloration due to UV irradiation is also slight; however, usability is poor because of acetic acid generated during curing.

On the other hand, regarding dealcoholization-type room temperature-curable organopolysiloxane compositions, the preparation method cannot be easily performed compared with the methods of preparing the deoximation-type and acetic acid elimination-type room temperature-curable organopolysiloxane compositions. One reason why the method for preparing a dealcoholization-type room temperature-curable organopolysiloxane composition cannot be easily performed is that, in the case where an organopolysiloxane having, at both molecular chain ends, silanol groups is used as a base polymer, it is necessary to subject the silanol groups to alkoxysilylation (to cap the ends with alkoxysilyl groups); however, the rate of reaction is slower than those of the deoximation-type and acetic acid elimination-type room temperature-curable organopolysiloxane compositions. To avoid this problem, a known method uses, as a base polymer, an organopolysiloxane having both molecular chain ends that have been subjected to alkoxysilylation in advance.

Generally known curing catalysts for dealcoholization-type room temperature-curable organopolysiloxane compositions are organotin compounds and organotitanium compounds. However, with regard to the organotin compounds, due to their toxicity, there are concerns about their adverse effects on the environment and the human body. On the other hand, with regard to the organotitanium compounds, although problems of toxicity have not been confirmed yet, there is still a problem in that, for example, the prepared room temperature-curable organopolysiloxanes turn yellow with time.

Typical examples of dealcoholization-type room temperature-curable organopolysiloxanes include compositions containing a polyorganosiloxane capped with silanol groups at the ends, an alkoxysilane, and an organotitanium compound, compositions containing a polyorganosiloxane capped with alkoxysilyl groups at the ends, an alkoxysilane, and an alkoxy titanium, compositions containing a linear polyorganosiloxane capped with alkoxysilyl groups with silethylene groups provided therebetween at the ends, an alkoxysilane, and an alkoxy titanium, and compositions containing a polyorganosiloxane capped with silanol groups at the ends or a polyorganosiloxane capped with alkoxysilyl groups at the ends and an alkoxy-α-silyl ester compound (Patent documents 1 to 4).

The room temperature-curable organopolysiloxanes described in these Patent documents exhibit storage stability, water resistance, and moisture resistance to a certain extent; however, they have not satisfied all of these required properties yet. Furthermore, rapid curing properties are still insufficient.

Patent document 5 discloses a room temperature-curable organopolysiloxane composition, in particular, a dealcoholization-type room temperature-curable organopolysiloxane composition that contains, as a base polymer, an organopolysiloxane capped with silanol groups at the ends and, as a crosslinking agent, an organosilane compound having hydrolyzable silyl-vinylene groups and that exhibits excellent rapid curing properties and excellent durability, but describes neither storage stability nor adhesion. In addition, moisture resistance of the resulting cured rubber is not discussed.

### Prior art documents

### Patent document

Patent document 1: Japanese Examined Patent Application Publication No. S39-27643
Patent document 2: Japanese Unexamined Patent Application Publication No. S55-43119
Patent document 3: Japanese Examined Patent Application Publication No. H07-39547
Patent document 4: Japanese Unexamined Patent Application Publication No. H07-331076
Patent document 5: Japanese Patent No. 6497390

### Summary of Invention

### Technical Problem

An object of the invention is to provide a room temperature-vulcanizing (RTV) silicone rubber composition, an adhesive, a sealing agent, and a coating agent that exhibit excellent rapid curing properties and adhesion, that exhibit good storage stability, and that can provide a cured product having durability (heat resistance and moisture resistance) without adding an environmentally harmful metal-based condensation catalyst that has been commonly used in existing room temperature-curable organopolysiloxane compositions.

### Solution to Problem

As a result of extensive studies to achieve the above object, the inventors of the invention have found that the above object can be achieved by a room temperature-vulcanizing (RTV) silicone rubber composition including, as a main agent (base polymer), an organopolysiloxane capped at both ends of the molecular chain with hydrolyzable silyl groups with or without silalkylene groups provided therebetween; as a crosslinking agent (curing agent), a hydrolyzable organosilane compound having two hydrolyzable silyl-vinylene groups on one silicon atom; and, as a condensation catalyst, a specific amino functional group-containing hydrolyzable organosilane compound, and a cured product thereof, and this finding has led to the completion of the invention.

Specifically, the invention provides the following room temperature-curable organopolysiloxane composition, adhesive, sealing agent, and coating agent.

[1] A room temperature-curable organopolysiloxane composition containing:
   (A) 100 parts by mass of an organopolysiloxane represented by a general formula (1) below: 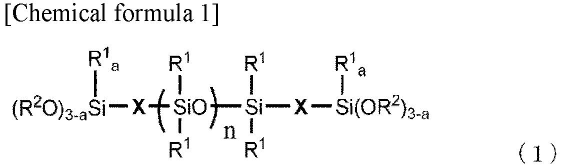 (wherein each R¹ is independently an unsubstituted or halogen-substituted monovalent hydrocarbon group having 1 to 10 carbon atoms, n is a number of 10 or more, each X is independently an oxygen atom or an alkylene group having 1 to 4 carbon atoms, each R² is independently an unsubstituted or substituted monovalent hydrocarbon group having 1 to 6 carbon atoms, and each a is independently 0 or 1 for each bonding silicon atom);
   (B) 0.1 to 30 parts by mass of a hydrolyzable organosilane compound having two hydrolyzable silyl-vinylene groups on one silicon atom, the hydrolyzable organosilane compound being represented by a general formula (2) below: 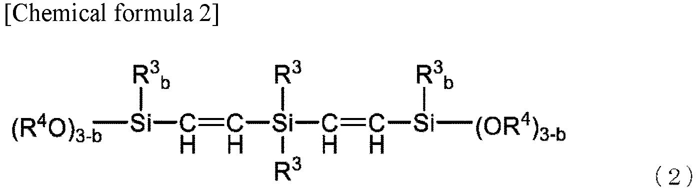 (wherein each R³ is independently an unsubstituted or substituted monovalent hydrocarbon group having 1 to 20 carbon atoms, each R⁴ is independently an unsubstituted or substituted alkyl group having 1 to 20 carbon atoms or an unsubstituted or substituted cycloalkyl group having 3 to 20 carbon atoms, and each b is an integer of 0 to 2);
   (C) 0.1 to 300 parts by mass of an inorganic filler; and
   (D) 0.1 to 5 parts by mass of an amino functional group-containing hydrolyzable organosilane compound having 3 or more nitrogen atoms in one molecule and/or a partially hydrolyzed condensate thereof.
[2] The room temperature-curable organopolysiloxane composition according to [1], wherein the component (D) is an amino functional group-containing hydrolyzable organosilane compound represented by a general formula (3) or (3)' below and/or a partially hydrolyzed condensate thereof,
   [Chemical formula 3]

   Y=N-Z-SiR₃ (3)

   Y-NH-Z-SiR₃ (3)'

   (wherein Y represents a monovalent or divalent hydrocarbon group having 1 to 15 carbon atoms and having two or more nitrogen atoms in a structure thereof, Z represents an unsubstituted or substituted divalent hydrocarbon group that has 1 to 10 carbon atoms and that may contain a heteroatom, R's are one or two or more monovalent groups selected from hydrolyzable groups having 1 to 6 carbon atoms and monovalent hydrocarbon groups having 1 to 6 carbon atoms, and among the three R's bonded to the silicon atom, at least two R's are hydrolyzable groups).
[3] The room temperature-curable organopolysiloxane composition according to [1] or [2], wherein the room temperature-curable organopolysiloxane composition is free of metal-based condensation catalysts.
[4] An adhesive containing the room temperature-curable organopolysiloxane composition according to any one of [1] to [3].
[5] A sealing agent containing the room temperature-curable organopolysiloxane composition according to any one of [1] to [3].
[6] A coating agent containing the room temperature-curable organopolysiloxane composition according to any one of [1] to [3].

### Advantageous Effects of Invention

The invention can provide a room temperature-vulcanizing (RTV) silicone rubber composition that has rapid curing properties, adhesion, and storage stability and that can provide a cured product having durability (heat resistance and moisture resistance) without adding an environmentally harmful metal-based condensation catalyst that has been commonly used in existing room temperature-curable organopolysiloxane compositions. Thus, the composition according to the present invention is useful as an adhesive, a sealing agent, and a coating agent.

### Description of Embodiments

The invention will be described in detail below.

### [Component (A)]

A component (A) of the organopolysiloxane composition according to the present invention serves as a main agent (base polymer) in the composition according to the present invention and is a linear organopolysiloxane represented by a general formula (1) below and capped at both ends of the molecular chain with hydrolyzable silyl groups with (in the case where X is an alkylene group) or without (in the case where X is an oxygen atom) silalkylene groups provided therebetween, the hydrolyzable silyl groups each having, as a hydrolyzable group, two or three organooxy groups bonded to a silicon atom. 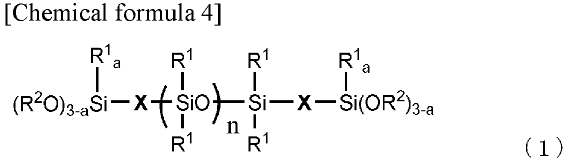 (In the formula, each R¹ is independently an unsubstituted or halogen-substituted monovalent hydrocarbon group having 1 to 10 carbon atoms, n is a number of 10 or more, each X is independently an oxygen atom or an alkylene group having 1 to 4 carbon atoms, each R² is independently a substituted or unsubstituted monovalent hydrocarbon group having 1 to 6 carbon atoms, and each a is independently 0 or 1 for each bonding silicon atom.)

In the formula (1), each R¹ is an unsubstituted or halogen-substituted monovalent hydrocarbon group having 1 to 10 carbon atoms, preferably 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, a neopentyl group, a hexyl group, a heptyl group, an octyl group, a 2-ethylhexyl group, a nonyl group, and a decyl group; cycloalkyl groups such as a cyclopentyl group and a cyclohexyl group; alkenyl groups such as a vinyl group, an allyl group, a propenyl group, an isopropenyl group, a butenyl group, a pentenyl group, a hexenyl group, and a cyclohexenyl group; aryl groups such as a phenyl group, a tolyl group, a xylyl group, and α-, β-naphthyl groups; aralkyl groups such as a benzyl group, a 2-phenylethyl group, and 3-phenylpropyl group; and groups obtained by partially substituting hydrogen atoms of any of these groups with a halogen atom, for example, a 3,3,3-trifluoropropyl group. Of these, a methyl group is particularly preferred. The plurality of R¹'s may be the same group or different groups.

In the formula (1), n is a number of 10 or more, usually a number of 10 to 2,000, preferably a number of 20 to 1,500, more preferably a number of 30 to 1,000, still more preferably a number of 50 to 800. The value of n is a number at which, in particular, a viscosity of the diorganopolysiloxane serving as the component (A) at 25°C is preferably in a range of 25 to 500,000 mPa·s, more preferably in a range of 500 to 100,000 mPa s.

In the invention, n, which is the number of repetitions (or the degree of polymerization) of the bifunctional diorganosiloxane unit represented by ((R¹)₂SiO_{2/2}) and constituting the main chain of the diorganopolysiloxane serving as the component (A), can be usually determined as, for example, the number-average degree of polymerization (or number-average molecular weight) in terms of polystyrene as measured by gel permeation chromatography (GPC) analysis using toluene or the like as a developing solvent. The viscosity can be usually measured at 25°C with a rotational viscometer (for example, a BL type, BH type, BS type, cone-plate type, or rheometer).

In the formula (1), each X is independently an oxygen atom or an alkylene group having 1 to 4 carbon atoms. Examples of such alkylene group having 1 to 4 carbon atoms include, linear alkylene groups such as a methylene group, an ethylene group, a propylene group (a trimethylene group), and a butylene group, and isomers thereof, for example, branched alkylene groups such as an isopropylene group (a methylethylene group) and an isobutylene group (a methylpropylene group) correspond to the alkylene group having 1 to 4 carbon atoms. X is particularly preferably an ethylene group. In the case of an ethylene group, the production can be easily performed by subjecting a corresponding hydrosilane to hydrosilylation addition reaction with an α,ω-divinyl-terminated organopolysiloxane in the presence of a metal catalyst, which is very versatile.

In the formula (1), each R² is independently an unsubstituted or substituted monovalent hydrocarbon group having 1 to 6 carbon atoms, and examples thereof include alkyl groups such as a methyl group, an ethyl group, a propyl group, an isopropyl group, a butyl group, an isobutyl group, a sec-butyl group, a tert-butyl group, a pentyl group, and a hexyl group; alkoxy-substituted alkyl groups such as a methoxymethyl group, a methoxyethyl group, a methoxyethyl group, and an ethoxyethyl group; cycloalkyl groups such as a cyclohexyl group; alkenyl groups such as a vinyl group, an allyl group, and a propenyl group; and a phenyl group, among which a methyl group and an ethyl group are particularly preferred.

Each a is independently 0 or 1 for each bonding silicon atom, and preferably 0.

The linear organopolysiloxanes capped at both ends of their molecular chains with hydrolyzable silyl groups, which serve as the component (A), may be used alone or in combination of two or more thereof.

### [Component (B)]

A component (B) of the organopolysiloxane composition according to the present invention is a hydrolyzable organosilane compound which has two hydrolyzable silyl-vinylene groups on one silicon atom (that is, a hydrolyzable organotrisilane compound in which silicon atoms of two hydrolyzable silyl groups (-Si(R³)_{b}(OR⁴)_{3-b}) present in the molecule are each linked to a silicon atom of one diorganosilylene group (-Si(R³)₂-) present in the molecule with a vinylene group (-CH=CH-)) and which is represented by a general formula (2) below, and acts as a crosslinking agent (curing agent) in the composition according to the present invention. 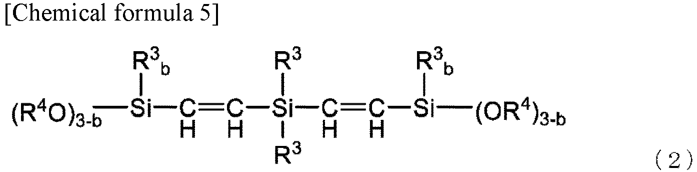 (In the formula, each R³ is independently an unsubstituted or substituted monovalent hydrocarbon group having 1 to 20 carbon atoms, and each R⁴ is independently an unsubstituted or substituted alkyl group having 1 to 20 carbon atoms or an unsubstituted or substituted cycloalkyl group having 3 to 20 carbon atoms. Each b is an integer of 0 to 2.)

In the general formula (2), the unsubstituted or substituted monovalent hydrocarbon groups represented by R³ have approximately 1 to 20 carbon atoms, preferably 1 to 10 carbon atoms, more preferably 1 to 8 carbon atoms and may be the same or different, and examples thereof include alkyl groups such as a methyl group, an ethyl group, a propyl group, an isopropyl group, a butyl group, an isobutyl group, a sec-butyl group, a tert-butyl group, a pentyl group, a neopentyl group, a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group; cycloalkyl groups such as a cyclopentyl group and a cyclohexyl group; alkenyl groups such as a vinyl group, an allyl group, a propenyl group, an isopropenyl group, a butenyl group, a pentenyl group, a hexenyl group, and a cyclohexenyl group; aryl groups such as a phenyl group, a tolyl group, a xylyl group, and α-, β-naphthyl groups; aralkyl groups such as a benzyl group, a 2-phenylethyl group, and 3-phenylpropyl group; and groups obtained by substituting some or all of hydrogen atoms of any of these groups with a halogen atom such as F, Cl, or Br, a cyano group, or the like, for example, a 3-chloropropyl group, a 3,3,3-trifluoropropyl group, and a 2-cyanoethyl group. Of these, a methyl group, an ethyl group, and a phenyl group are preferred, and, in view of the ease of availability, productivity, and cost, a methyl group and a phenyl group are particularly preferred.

The unsubstituted or substituted alkyl groups represented by R⁴ have approximately 1 to 20 carbon atoms, preferably 1 to 6 carbon atoms, more preferably 1 to 4 carbon atoms, and examples thereof include a methyl group, an ethyl group, a propyl group, an isopropyl group, a butyl group, an isobutyl group, a sec-butyl group, a tert-butyl group, a pentyl group, a neopentyl group, a hexyl group, a heptyl group, an octyl group, a 2-ethylhexyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an eicosyl group. The unsubstituted or substituted cycloalkyl groups have approximately 3 to 20 carbon atoms, preferably 4 to 8 carbon atoms, more preferably 5 to 6 carbon atoms, and examples thereof include a cyclopentyl group and a cyclohexyl group. Some or all of hydrogen atoms of any of these alkyl groups and cycloalkyl groups may be substituted with a halogen atom such as F, Cl, or Br, a cyano group, or the like, and examples thereof include a 3-chloropropyl group, a 3,3,3-trifluoropropyl group, and a 2-cyanoethyl group. Of these, R⁴ is preferably a methyl group or an ethyl group, particularly preferably a methyl group in view of, for example, hydrolyzability.

In the general formula (2), each b is independently an integer of 0 to 2 and is preferably 0 or 1 in view of curability.

A production example of the component (B) is described below.

### <Production of hydrolyzable organosilane compound having two hydrolyzable silyl-vinylene groups on one silicon atom>

The hydrolyzable organosilane compound having two hydrolyzable silyl-vinylene groups on one silicon atom, which serves as the component (B), can be easily produced by, for example, subjecting a silane having two ethynyl groups on one silicon atom and a hydrolyzable group-containing hydrosilane, such as an alkoxyhydrosilane, whose number of moles is twice the number of moles of the silane, to an addition reaction through hydrosilylation reaction. This reaction formula is represented by, for example, a reaction formula [1] below. 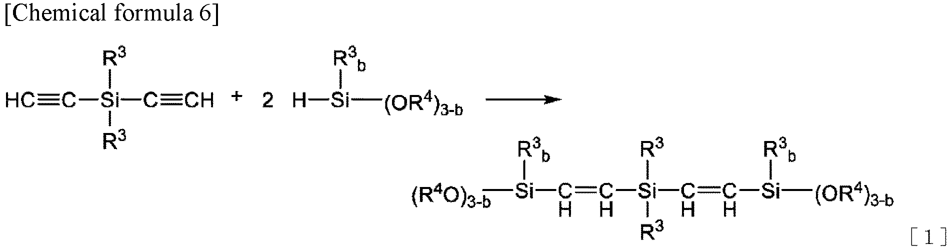 (In the formula, R³, R⁴, and b represent the same as those in the general formula (2).)

An addition reaction catalyst used when the alkoxyhydrosilane is added may be a platinum group metal-based catalyst such as a platinum-based, palladium-based, rhodium-based, or ruthenium-based catalyst, and a platinum-based catalyst is particularly preferred. Examples of the platinum-based catalyst include catalysts obtained by supporting solid platinum on a carrier such as platinum black, alumina, or silica, chloroplatinic acid, alcohol-modified chloroplatinic acid, complexes of chloroplatinic acid and an olefin, and complexes of platinum and vinylsiloxane. The amount of platinum used may be a so-called catalyst amount, and platinum can be used in an amount of, for example, 0.1 to 1,000 ppm, in particular, 0.5 to 100 ppm by mass in terms of platinum group metal relative to an alkoxyhydrosilane.

This reaction is preferably performed generally at a temperature of 50°C to 120°C, in particular, 60°C to 100°C for 0.5 to 12 hours, in particular, 1 to 6 hours. The reaction can be performed without using a solvent; however, an appropriate solvent such as toluene or xylene can be used as needed as long as the solvent does not adversely affect the addition reaction, etc.

In the addition reaction of a hydrolyzable group-containing hydrosilane such as an alkoxyhydrosilane to an acetylenyl group (ethynyl group), geometric isomers are produced. Although an E-isomer (trans-isomer) is highly selectively produced, in the silicon-containing compound of the invention, a Z-isomer (cis-isomer) also does not adversely affect the properties; therefore, these isomers can be used without separation.

Specific examples of the hydrolyzable organosilane compound having two hydrolyzable silyl-vinylene groups, such as alkoxysilyl -vinylene groups, on one silicon atom and represented by the general formula (2) include compounds represented by structural formulae below. As the component (B), these can be used alone or in combination of two or more thereof.

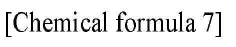

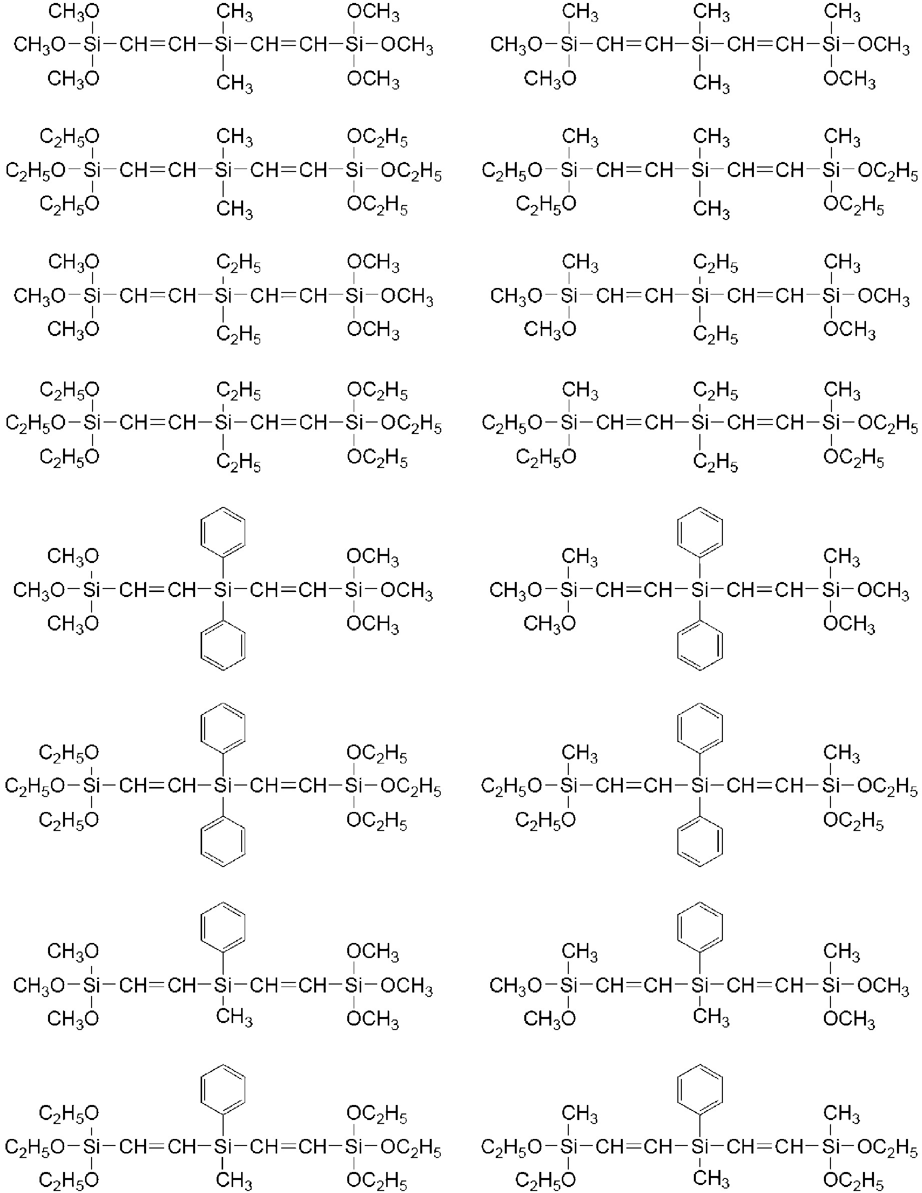

The hydrolyzable organosilane compound serving as the component (B) is used in an amount of 0.1 to 30 parts by mass, preferably 1 to 20 parts by mass per 100 parts by mass of the organopolysiloxane serving as the component (A). If the amount of component (B) is less than 0.1 parts by mass, sufficient crosslinking is not achieved, and a composition having desired rapid curing properties is not provided. If the amount component (B) is more than 30 parts by mass, mechanical properties of the resulting rubber physical properties also deteriorate, which may result in a problem of being economically disadvantageous.

The hydrolyzable organosilane compounds serving as the component (B) may be used alone or in combination of two or more thereof.

### [Component (C)]

An inorganic filler serving as a component (C) is a component added for the purpose of improving, for example, the strength and thixotropic properties of the composition, and, specifically, may be a silica-based filler such as dry silica, e.g., pyrogenic silica, crushed silica, fused silica, or aerosol silica (fumed silica), wet silica, e.g., precipitated silica, colloidal silica, or sol-gel process silica, or crystalline silica (quartz fine powder), aluminum hydroxide, alumina, boehmite, magnesium hydroxide, magnesium oxide, calcium hydroxide, calcium carbonate, zinc carbonate, basic zinc carbonate, zinc oxide, titanium oxide, carbon black, glass beads, or glass balloons, which may undergo surface hydrophobizing treatment or remain untreated. These may be used alone or in combination of two or more thereof. These inorganic fillers may not be subjected to surface treatment or may be subjected to surface hydrophobizing treatment with a publicly known treatment agent.

The component (C) is used in an amount of 0.1 to 300 parts by mass, preferably 1 to 300 parts by mass per 100 parts by mass of the organopolysiloxane serving as the component (A). If the amount of component (C) is less than 0.1 parts by mass, the composition does not have sufficient strength. If the amount of component (C) is more than 300 parts by mass, elasticity of the resulting rubber physical properties deteriorates, which may result in a problem of being economically disadvantageous.

### [Component (D)]

A component (D) is an important compound functioning as a condensation catalyst in the room temperature-curable organopolysiloxane composition according to the present invention and is specifically an amino functional group-containing hydrolyzable organosilane compound having 3 or more, preferably 3 to 6, more preferably 3 to 5 nitrogen atoms in one molecule and/or a partially hydrolyzed condensate thereof, in particular, an amino functional group-containing hydrolyzable organosilane compound having a monovalent or divalent basic moiety (Y) that exhibits a catalytic function, the hydrolyzable organosilane compound being represented by a general formula (3) or (3)' below, and/or a partially hydrolyzed condensate thereof.
[Chemical formula 8]

Y=N-Z-SiR₃ (3)

Y-NH-Z-SiR₃ (3) '

In the formula (3) or (3)', Y represents a monovalent or divalent hydrocarbon group having 1 to 15 carbon atoms and having two or more nitrogen atoms in the structure thereof, and Z represents an unsubstituted or substituted divalent hydrocarbon group that has 1 to 10 carbon atoms and that may contain a heteroatom. R's are independently one or two or more monovalent groups selected from hydrolyzable groups having 1 to 6 carbon atoms and monovalent hydrocarbon groups having 1 to 6 carbon atoms, and among the three R's bonded to the silicon atom, at least two R's are hydrolyzable groups.

In the general formula (3) or (3)', the monovalent or divalent basic moiety (Y) that exhibits a catalytic function represents a monovalent or divalent hydrocarbon group having 1 to 15 carbon atoms and having two or more, preferably 2 to 5, more preferably 2 to 4 nitrogen atoms in the structure thereof. In the basic moiety (Y), the monovalent group may be, for example, a group derived from 1,5,7-triazabicyclo[4.4.0]dec-5-ene, represented by a formula (4) below, and the divalent group may be, for example, an N-substituted or unsubstituted guanidyl group represented by a formula (5) below. In the formulae (4) and (5) below, the wavy line represents a bonding site to the nitrogen atom in the formula (3) or the formula (3)'.

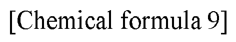

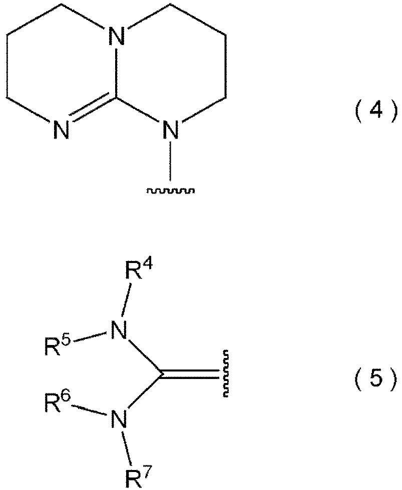

R⁴ to R⁷ in the formula (5) each independently represent a hydrogen atom, a linear, branched, or cyclic alkyl group, alkenyl group, or aryl group having 1 to 10 carbon atoms, and examples thereof include alkyl groups such as a methyl group, an ethyl group, and a propyl group; cyclic alkyl groups such as a cyclohexyl group; alkenyl groups such as a vinyl group and an allyl group; and aryl groups such as a phenyl group and a tolyl group. Of these, a methyl group, an ethyl group, and a phenyl group are preferred, and a methyl group is particularly preferred. R⁴ to R⁷ may be the same or different.

In the formula (3) or (3)', R's are independently one or two or more monovalent groups selected from hydrolyzable groups having 1 to 6 carbon atoms, preferably 1 to 4 carbon atoms (that is, groups capable of bonding to a silicon atom to form a Si-O-C bond), such as alkoxy groups, e.g., a methoxy group, an ethoxy group, a propoxy group, an isopropoxy group, a butoxy group, an isobutoxy group, and a tert-butoxy group, alkenyloxy groups, e.g., a vinyloxy group, an allyloxy group, a propenoxy group, and an isopropenoxy group, ketoxime groups, e.g., a dimethylketoxime group, a diethylketoxime group, and a methylethylketoxime group, and acyloxy groups, e.g., an acetoxy group; and monovalent hydrocarbon groups having 1 to 6 carbon atoms, preferably having 1 to 4 carbon atoms, such as alkyl groups, e.g., a methyl group and an ethyl group, alkenyl groups, e.g., a vinyl group, and aryl groups, e.g., a phenyl group, and among the three R's bonded to the silicon atom, at least two, preferably three R's are hydrolyzable groups.

In the formula (3) or (3)', examples of the hydrolyzable silyl group (-SiR₃) include alkoxysilyl groups such as a trimethoxysilyl group, a methyldimethoxysilyl group, a vinyldimethoxysilyl group, a phenyldimethoxysilyl group, and a triethoxysilyl group; isopropenoxysilyl groups such as a triisopropenoxysilyl group, a methyldiisopropenoxysilyl group, an ethyldiisopropenoxysilyl group, a vinyldiisopropenoxysilyl group, and a phenyldiisopropenoxysilyl group; and ketoximesilyl groups such as a tris(dimethylketoxime)silyl group, a tris(diethylketoxime)silyl group, and a tris(ethylmethylketoxime)silyl group.

In the formula (3) or (3)', Z represents an unsubstituted or substituted divalent hydrocarbon group such as a linear, branched, or cyclic alkylene group, alkenylene group, or arylene group, or a combination thereof, the divalent hydrocarbon group having 1 to 10 carbon atoms, in particular, 3 to 6 carbon atoms and optionally containing a heteroatom such as an oxygen atom or a nitrogen atom. Z may be, for example, an alkylene group such as a methylene group, an ethylene group, a trimethylene group, a propylene group, a tetramethylene group, a hexamethylene group, an octamethylene group, a decamethylene group, or a 2-methylpropylene group; an arylene group such as a phenylene group; a group constituted by the foregoing alkylene group and the foregoing arylene group bonded to the alkylene group; or the foregoing alkylene group in which a ketone, ester, amide, or the like is inserted, and is preferably, for example, a methylene group, an ethylene group, a trimethylene group, a propylene group, or a propylene group in which an amide bond is inserted and particularly preferably a trimethylene group.

Specific examples of the amino functional group-containing hydrolyzable organosilane represented by the general formula (3) or the general formula (3)' include those represented by general formulae (6) to (11) below. Note that Me, Et, and Ph represent a methyl group, an ethyl group, and a phenyl group, respectively.

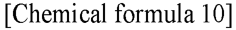

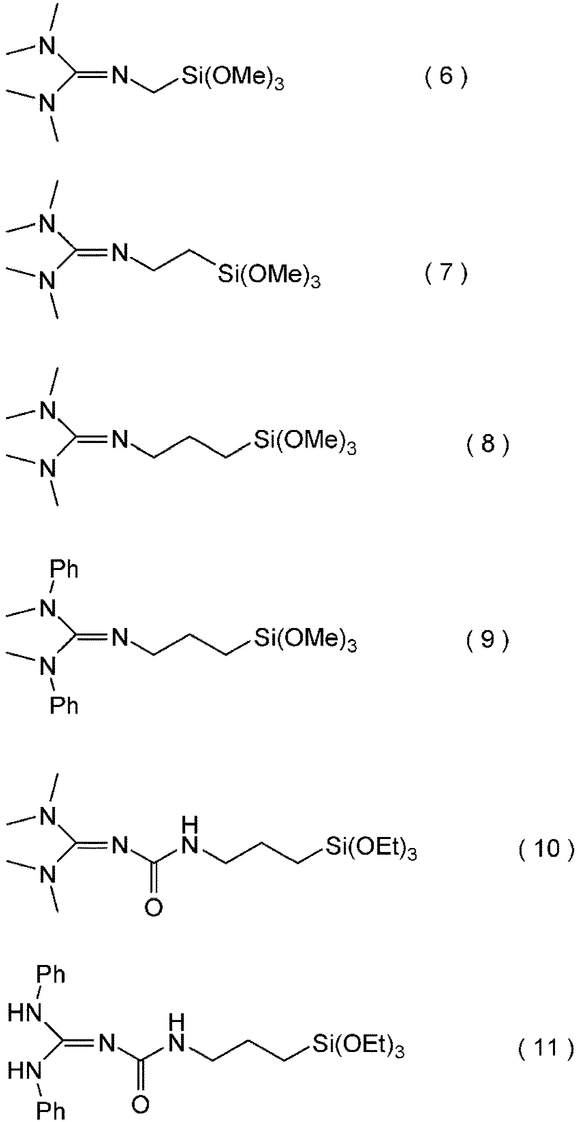

Among the general formulae (6) to (11), preferred is an N-methyl-substituted guanidyl group-containing trialkoxysilane such as an N-methyl-substituted guanidyl group-containing trimethoxysilane (for example, γ-(N,N'-dimethylguanidyl)propyltrimethoxysilane) represented by the formula (6), (7), or (8), in particular, represented by the formula (8).

The amount of component (D) blended is 0.1 to 5 parts by mass, preferably 0.5 to 4 parts by mass, more preferably 0.5 to 3 parts by mass per 100 parts by mass of the component (A). If the amount is less than 0.1 parts by mass, the function as a desired end-capping catalyst may not be developed. An amount of more than 5 parts by mass is not preferred because it is disadvantageous in terms of cost.

### [Other components]

In order to further improve adhesion of the cured product of the composition according to the present invention to various adherends, as an optional component that can be blended as required, a silane coupling agent (a hydrolyzable silane compound such as an alkoxysilane having, in one molecule, a monovalent hydrocarbon group having a functional group (excluding a guanidyl group) containing a heteroatom selected from nitrogen, sulfur, and oxygen, or a so-called carbon functional silane compound) may be added to the composition as an adhesion-imparting agent. The silane coupling agent may be a silane compound having, as a hydrolyzable group, an alkoxysilyl group or an alkenoxysilyl group, and examples thereof include vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldiethoxysilane, N-β-(aminoethyl) γ-aminopropyltrimethoxysilane, γ-aminopropyltriethoxysilane, 3-(N-aminomethylbenzylamino)propyltrimethoxysilane, N,N'-bis[3-(trimethoxysilyl)propyl]ethylenediamine, N,N-bis[3-(trimethoxysilyl)propyl]amine, γ-mercaptopropyltrimethoxysilane, γ-glycidoxypropyltriisopropenoxysilane, γ-glycidoxypropylmethyldiisopropenoxysilane, reaction products of (meth)acrylsilane and an aminosilane, reaction products of an epoxysilane and an aminosilane, and reaction products of an aminosilane and an alkyl halide group-containing silane. In particular, a silane coupling agent having at least one amino group in one molecule is preferably used.

When a silane coupling agent is blended, the amount blended is usually 0.1 to 20 parts by mass, preferably 0.1 to 10 parts by mass, particularly preferably 0.1 to 5 parts by mass per 100 parts by mass of the component (A). If the amount is less than 0.1 parts by mass, sufficient adhesion may not be obtained. If the amount is more than 20 parts by mass, satisfactory mechanical properties may not be obtained, and it may be disadvantageous in terms of cost.

Furthermore, the room temperature-curable organopolysiloxane composition according to the present invention may contain, as an optional component that can be blended as required, a curing catalyst (condensation catalyst) other than the component (D). A non-metal-based condensation catalyst can be suitably used as the curing catalyst other than the component (D), and such curing catalysts may be used alone or as a mixture of two or more thereof. Examples of the curing catalyst (condensation catalyst) other than the component (D) include non-metal-based condensation catalysts such as amine compounds, e.g., dibutylamine and laurylamine, and salts thereof; and organosilazane compounds, e.g., hexamethyldisilazane. Since the room temperature-curable organopolysiloxane composition according to the present invention exhibits excellent curing properties such as rapid curing properties, an organosilazane compound is preferably added.

When the curing catalyst (condensation catalyst) other than the component (D) is blended, the amount blended is 0.001 to 20 parts by mass, preferably 0.01 to 5 parts by mass, particularly preferably 0.03 to 3 parts by mass per 100 parts by mass of the component (A). If the amount is less than 0.001 parts by mass, sufficient crosslinkability (curability) may not be obtained. If the amount is more than 20 parts by mass, it may be disadvantageous in terms of cost, and a disadvantage such as a decrease in the curing rate may occur.

The room temperature-curable organopolysiloxane composition according to the present invention may contain, in addition to the foregoing components, various additives as optional components. Publicly known additives may be added as the additives as long as the object of the invention is not impaired. Examples thereof include polyether compounds serving as wetters or thixotropy improvers, non-reactive dimethylsilicone oil (dimethylpolysiloxane capped at both ends of the molecular chain with trialkylsilyl groups) and isoparaffin serving as plasticizers, and three-dimensional network-structured organopolysiloxane resins composed of a trimethylsiloxy unit [(CH₃)₃SiO_{1/2} unit] and a SiO₂ unit and serving as crosslinking density improvers.

Furthermore, if necessary, coloring agents such as pigments, dyes, and fluorescent brighteners; fungicides; antibacterial agents; bleed oil such as non-reactive phenylsilicone oil (methylphenylpolysiloxane capped at both ends of the molecular chain with trialkylsilyl groups) and fluorosilicone oil (methyl(3,3,3-trifluoropropyl)polysiloxane capped at both ends of the molecular chain with trialkylsilyl groups); surface modifiers such as organic liquids incompatible with silicones; and solvents such as toluene, xylene, solvent volatile oil, cyclohexane, methylcyclohexane, and low-boiling point isoparaffin may also be added.

### Method for producing composition

The room temperature-curable organopolysiloxane composition according to the present invention can be obtained by mixing the foregoing components (A) to (D) and, as appropriate, other components. The mixing method may be an existing method, and the components may be mixed together under reduced pressure.

The room temperature-curable organopolysiloxane composition according to the present invention can be stored in an atmosphere that avoids moisture. When the room temperature-curable organopolysiloxane composition is allowed to stand in an air atmosphere at room temperature (23°C ± 15°C), the organopolysiloxane composition is cured by water (moisture) in the air usually for five minutes to one week without adding an environmentally harmful metal-based condensation catalyst which has been commonly used in existing room temperature-curable organopolysiloxane compositions.

### EXAMPLES

Hereinafter, the working and comparative examples will be described for specifically illustrating the invention, but the invention is not limited to the following working examples. In the working examples, the viscosity is a value measured with a rotational viscometer at 23°C, and the degree of polymerization is a number-average degree of polymerization in terms of polystyrene as measured by gel permeation chromatography analysis using toluene as a developing solvent.

### Working example 1

A mixture A was prepared by homogeneously mixing and stirring, for 30 minutes, 60 parts by mass of dimethylpolysiloxane capped at both ends of the molecular chain with trimethoxysiloxy groups and having a viscosity of 20,000 mPa s (i.e., dimethylpolysiloxane capped at both ends of the molecular chain with trimethoxysiloxy groups, which corresponds to an organopolysiloxane represented by the formula (1) in which X = oxygen atom, R¹ = R² = methyl group, a = 0, and n = about 620), 25 parts by mass of dimethylpolysiloxane capped at both ends of the molecular chain with trimethylsiloxy groups and having a viscosity of 100 mPa s, and 9 parts by mass of aerosol silica having a BET specific surface area of 130 m²/g. Subsequently, a composition 1 was obtained by adding, to the mixture A, 12 parts by mass of bis(dimethoxymethylsilyl-vinylene)dimethylsilane (i.e., which corresponds to a compound represented by the formula (2) in which R³ = R⁴ = methyl group and b = 1, the same applies hereinafter), 1.0 part by mass of γ-aminopropyltriethoxysilane, 0.5 parts by mass of hexamethyldisilazane, and 1.0 part by mass of γ-(N,N'-dimethylguanidyl)propyltrimethoxysilane and performing mixing under a reduced-pressure condition for 15 minutes.

### Working example 2

A composition 2 was obtained by adding, to the mixture A prepared as in the working example 1, 12 parts by mass of bis(dimethoxymethylsilyl-vinylene)dimethylsilane, 1.0 part by mass of γ-aminopropyltriethoxysilane, 0.5 parts by mass of hexamethyldisilazane, and 1.5 parts by mass of γ-(N,N'-dimethylguanidyl)propyltrimethoxysilane and performing mixing under a reduced-pressure condition for 15 minutes.

### Working example 3

A mixture B was prepared by homogeneously mixing and stirring, for 30 minutes, 60 parts by mass of dimethylpolysiloxane capped at both ends of the molecular chain with trimethoxysilyl groups with silethylene groups provided therebetween and having a viscosity of 30,000 mPa s (i.e., dimethylpolysiloxane capped at both ends of the molecular chain with (trimethoxysilyl)ethyl groups, which corresponds to an organopolysiloxane represented by the formula (1) in which X = ethylene group, R¹ = R² = methyl group, a = 0, and n = about 700), 25 parts by mass of dimethylpolysiloxane capped at both ends of the molecular chain with trimethylsiloxy groups and having a viscosity of 100 mPa·s at 25°C, and 9 parts by mass of aerosol silica having a BET specific surface area of 130 m²/g. Subsequently, a composition 3 was obtained by adding, to the mixture B, 12 parts by mass of bis(dimethoxymethylsilyl-vinylene)dimethylsilane, 1.0 part by mass of γ-aminopropyltriethoxysilane, 0.5 parts by mass of hexamethyldisilazane, and 1.0 part by mass of γ-(N,N'-dimethylguanidyl)propyltrimethoxysilane and performing mixing under a reduced-pressure condition for 15 minutes.

### Comparative example 1

A composition 4 was obtained by adding, to the mixture A prepared as in the working example 1, 8 parts by mass of trimethoxy(methyl)silane, 1.0 part by mass of γ-aminopropyltriethoxysilane, 0.5 parts by mass of hexamethyldisilazane, and 0.2 parts by mass of dioctyltin dineodecanoate (metal-based condensation catalyst) and performing mixing under a reduced-pressure condition for 15 minutes.

### Comparative example 2

A composition 5 was obtained by adding, to the mixture A prepared as in the working example 1, 12 parts by mass of bis(dimethoxymethylsilyl-vinylene)dimethylsilane, 1.0 part by mass of γ-aminopropyltriethoxysilane, 0.5 parts by mass of hexamethyldisilazane, and 0.2 parts by mass of dioctyltin dineodecanoate (metal-based condensation catalyst) and performing mixing under a reduced-pressure condition for 15 minutes.

### Comparative example 3

A composition 6 was obtained by adding, to the mixture A prepared as in the working example 1, 12 parts by mass of bis(dimethoxymethylsilyl-vinylene)dimethylsilane, 1.0 part by mass of γ-aminopropyltriethoxysilane, and 0.5 parts by mass of hexamethyldisilazane and performing mixing under a reduced-pressure condition for 15 minutes.

### Comparative example 4

A mixture C was prepared by homogeneously mixing and stirring, for 30 minutes, 100 parts by mass of dimethylpolysiloxane capped at both ends of the molecular chain with silanol groups (which have a hydroxy group bonded to a silicon atom) and having a viscosity of 5,000 mPa s, and 9 parts by mass of aerosol silica having a BET specific surface area of 130 m²/g. Subsequently, a composition 7 was obtained by adding, to the mixture C, 5 parts by mass of bis(trimethoxysilyl-vinylene)dimethylsilane, and 0.75 parts by mass of γ-(N,N'-dimethylguanidyl)propyltrimethoxysilane, and performing mixing under a reduced-pressure condition for 15 minutes.

The following properties were measured using the prepared compositions 1 to 7.

### • Tack-free time

For each of the prepared compositions 1 to 7, the tack-free time (min) was evaluated by finger touch in an environment at 23°C/50% RH according to the method described in JIS K 6249. The obtained results are shown in Table 1.

### • Curability

The prepared compositions 1 to 7 were each allowed to stand in an environment at 23°C/50 %RH for seven days to be cured so as to have a thickness of 3 mm, thus preparing measurement samples of silicone rubber cured products (3 mm in thickness), and the hardness, elongation, and tensile strength were measured according to JIS K 6249. The obtained results are shown in Table 1.

### • Adhesion

The prepared compositions 1 to 7 were each applied to adherends whose surfaces had been cleaned with ethanol and which were composed of various base materials shown in Table 1 so as to have a thickness of 3 mm and cured in an environment at 23°C/50 %RH for seven days to thereby prepare measurement samples in which a silicone rubber cured product layer (3 mm in thickness) was disposed on such a base material. Seven days later, the rubbers (cured products of the compositions) were peeled off from the adherends (measurement samples in which the silicone rubber cured product layer was disposed on the base material) to check adhesion, and evaluation was performed on the basis of the following criteria. The obtained results are shown in Table 1.
∘: When a cut of about 1 cm is made at the interface between the adherend and the rubber, and the rubber is pulled by hand in the shear direction, the rubber does not peel off from the adherent (cohesive failure).
×: When a cut of about 1 cm is made at the interface between the adherend and the rubber, and the rubber is pulled by hand in the shear direction, the rubber peels off from the adherent (interfacial peeling).

### ·Storage stability

The prepared compositions 1 to 7 were each placed in a sealable container made of polyethylene and then allowed to stand in an environment at 70°C for seven days. Subsequently, the compositions were allowed to stand in an environment at 23°C/50 %RH for seven days to be cured so as to have a thickness of 3 mm, thus preparing measurement samples of silicone rubber cured products (3 mm in thickness), and the hardness, elongation, and tensile strength were measured according to JIS K 6249. The obtained results are shown in Table 2.

Note that the values measured using the samples before being allowed to stand in the environment at 70°C for seven days were used as initial values.

### ·Durability (Heat resistance and moisture resistance)

The prepared compositions 1 to 7 were each allowed to stand in an environment at 23°C/50 %RH for seven days to be cured so as to have a thickness of 3 mm, thus preparing silicone rubber cured products (3 mm in thickness), and No. 2 dumbbell specimens specified in JIS K 6249 were then prepared. The specimens were allowed to stand in a chamber at 150°C, 200°C, or 85°C/85 %RH for 500 hours or 1,000 hours, and changes in the hardness and tensile strength were measured. The obtained results are shown in Table 3.

Note that the values measured using the samples before being allowed to stand in each chamber for 500 hours or 1,000 hours were used as initial values.

**[Table 1]**

| | | Unit | Composition 1 | Composition 2 | Composition 3 | Composition 4 | Composition 5 | Composition 6 | Composition 7 |
|---|---|---|---|---|---|---|---|---|---|
| Tack-free time | | min | 12 | 10 | 15 | 14 | 25 | Not measurable | 5 |
| Hardness; Type-A | | | 29 | 35 | 26 | 28 | 37 | Not measurable | 25 |
| Elongation | | % | 190 | 190 | 230 | 230 | 120 | | 120 |
| Tensile strength | | MPa | 1.1 | 1.4 | 1.1 | 1.2 | 1.2 | | 0.68 |
| Adhesion | Base material | Aluminum | ○ | ○ | ○ | ○ | ○ | Not measurable | ο |
| | | SUS | ○ | ○ | ○ | ○ | ○ | | × |
| | | ABS | ○ | ○ | ○ | ○ | ○ | | × |
| | | PBT | ○ | ○ | ○ | ○ | ○ | | × |
| | | Epoxy resin | ○ | ○ | ○ | ○ | ○ | | ○ |
| | | Vinyl chloride resin | ○ | ○ | ○ | ○ | ○ | | × |
| | | Modified PPE | ○ | ○ | ○ | × | ○ | | × |
| | | Glass | ○ | ○ | ○ | ○ | ○ | | ○ |

The compositions 1 to 5 each exhibited good curability and adhesion. Regarding the composition 4, peeling was observed in some of the base materials.

Regarding the composition 6, a cured product was not obtained even after the composition was allowed to stand in the environment at 23°C/50 %RH for seven days, and therefore the physical properties could not be measured.

The composition 7 provided a good elastomer, although the tensile strength was low. However, the adhesion to various base materials was poor.

**[Table 2]**

| | | Unit | Composition 1 | Composition 2 | Composition 3 | Composition 4 | Composition 5 | Composition 6 | Composition 7 |
|---|---|---|---|---|---|---|---|---|---|
| Initial | Hardness; Type-A | | 29 | 35 | 26 | 28 | 37 | Not measurable | 25 |
| | Elongation | % | 190 | 190 | 230 | 230 | 120 | | 120 |
| | Tensile strength | MPa | 1.1 | 1.4 | 1.1 | 1.2 | 1.2 | | 0.68 |
| 70°C/ 7 days | Hardness; Type-A | | 29 | 33 | 26 | 26 | 35 | Not measurable | 15 |
| | Elongation | % | 200 | 170 | 240 | 180 | 180 | | 250 |
| | Tensile strength | MPa | 1.2 | 1.3 | 1.2 | 0.93 | 1.5 | | 0.32 |

The compositions except for the composition 6 and the composition 7 exhibited good storage stability; however, in the composition 4, the tensile strength decreased by about 20%.

Regarding the composition 6, a cured product was not obtained even after the composition was allowed to stand in the environment at 23°C/50 %RH for seven days, and therefore the physical properties could not be measured.

**Table 3]**

| ·Hardness | | | | | | | | |
|---|---|---|---|---|---|---|---|---|
| | Standing time (hrs) | Composition 1 | Composition 2 | Composition 3 | Composition 4 | Composition 5 | Composition 6 | Composition 7 |
| Initial | | 29 | 35 | 26 | 28 | 37 | Not measurable | 25 |
| 150°C | 500 | 35 | 38 | 32 | 25 | 40 | Not measurable | 23 |
| | 1000 | 38 | 39 | 34 | 24 | 39 | | 20 |
| 200°C | 500 | 38 | 41 | 35 | 28 | 43 | Not measurable | 26 |
| | 1000 | 40 | 43 | 38 | 30 | 46 | | 25 |
| 85°C/85%RH | 500 | 29 | 34 | 27 | 23 | 28 | Not measurable | 14 |
| | 1000 | 28 | 34 | 27 | 35 | 16 | | 10 |

| | Standing time (hrs) | Composition 1 | Composition 2 | Composition 3 | Composition 4 | Composition 5 | Composition 6 | Composition 7 |
|---|---|---|---|---|---|---|---|---|
| Initial | | 1.1 | 1.4 | 1.1 | 1.2 | 1.2 | Not measurable | 0.68 |
| 150°C | 500 | 1.4 | 1.5 | 1.3 | 1.0 | 0.83 | Not measurable | 0.69 |
| | 1000 | 1.4 | 1.5 | 1.3 | 1.2 | 0.65 | | 0.62 |
| 200°C | 500 | 1.5 | 1.3 | 1.5 | 1.1 | 0.55 | Not measurable | 0.70 |
| | 1000 | 1.6 | 1.3 | 1.6 | 0.96 | 0.32 | | 0.71 |
| 85°C/85%RH | 500 | 1.2 | 1.2 | 1.2 | 0.88 | 0.50 | Not measurable | 0.41 |
| | 1000 | 1.2 | 1.2 | 1.1 | 0.81 | 0.31 | | 0.29 |

| | | | | | | | | |
|---|---|---|---|---|---|---|---|---|
| ·Tensile strength | | | | | | | | |

In the compositions 1 to 3, no significant changes in the hardness and tensile strength were observed under any of the durability conditions.

In the composition 4, although the hardness did not change, the tensile strength tended to decrease under the conditions of 200°C (1,000 hours) and 85°C/85 %RH.

In the composition 5 and the composition 7, the tensile strength significantly decreased under the conditions of 85°C/85 %RH.

Regarding the composition 6, a cured product was not obtained even after the composition was allowed to stand in the environment at 23°C/50 %RH for seven days, and therefore the physical properties could not be measured.

## Claims

1. A room temperature-curable organopolysiloxane composition comprising:
(A) 100 parts by mass of an organopolysiloxane represented by a general formula (1) below: 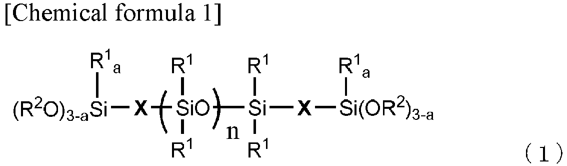 (wherein each R¹ is independently an unsubstituted or halogen-substituted monovalent hydrocarbon group having 1 to 10 carbon atoms, n is a number of 10 or more, each X is independently an oxygen atom or an alkylene group having 1 to 4 carbon atoms, each R² is independently an unsubstituted or substituted monovalent hydrocarbon group having 1 to 6 carbon atoms, and each a is independently 0 or 1 for each bonding silicon atom);
(B) 0.1 to 30 parts by mass of a hydrolyzable organosilane compound having two hydrolyzable silyl-vinylene groups on one silicon atom, the hydrolyzable organosilane compound being represented by a general formula (2) below: 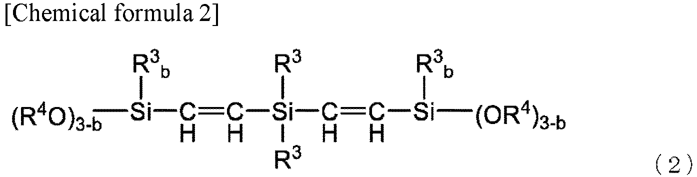 (wherein each R³ is independently an unsubstituted or substituted monovalent hydrocarbon group having 1 to 20 carbon atoms, each R⁴ is independently an unsubstituted or substituted alkyl group having 1 to 20 carbon atoms or an unsubstituted or substituted cycloalkyl group having 3 to 20 carbon atoms, and each b is an integer of 0 to 2);
(C) 0.1 to 300 parts by mass of an inorganic filler; and
(D) 0.1 to 5 parts by mass of an amino functional group-containing hydrolyzable organosilane compound having 3 or more nitrogen atoms in one molecule and/or a partially hydrolyzed condensate thereof.

2. The room temperature-curable organopolysiloxane composition according to claim 1, wherein the component (D) is an amino functional group-containing hydrolyzable organosilane compound represented by a general formula (3) or (3)' below and/or a partially hydrolyzed condensate thereof,
[Chemical formula 3]
Y=N-Z-SiR₃ (3)
Y-NH-Z-SiR₃ (3)'
(wherein Y represents a monovalent or divalent hydrocarbon group having 1 to 15 carbon atoms and having two or more nitrogen atoms in a structure thereof, Z represents an unsubstituted or substituted divalent hydrocarbon group that has 1 to 10 carbon atoms and that may contain a heteroatom, R's are independently one or two or more monovalent groups selected from hydrolyzable groups having 1 to 6 carbon atoms and monovalent hydrocarbon groups having 1 to 6 carbon atoms, and among the three R's bonded to the silicon atom, at least two R's are hydrolyzable groups).

3. The room temperature-curable organopolysiloxane composition according to claim 1 or 2, wherein the room temperature-curable organopolysiloxane composition is free of metal-based condensation catalysts.

4. An adhesive comprising the room temperature-curable organopolysiloxane composition according to any one of claims 1 to 3.

5. A sealing agent comprising the room temperature-curable organopolysiloxane composition according to any one of claims 1 to 3.

6. A coating agent comprising the room temperature-curable organopolysiloxane composition according to any one of claims 1 to 3.
